Europäisches Patentamt

European Patent Office

Office européen des brevets

(19)

(11) Veröffentlichungsnummer: **0 022 273**
**A2**

(12) # EUROPÄISCHE PATENTANMELDUNG

(21) Anmeldenummer: 80103909.0

(22) Anmeldetag: 09.07.80

(51) Int. Cl.³: **F 16 H 29/20**
//B60K17/08

(30) Priorität: 10.07.79 DE 2927768
13.09.79 DE 2936957
20.11.79 DE 2946769
15.12.79 DE 2950631

(43) Veröffentlichungstag der Anmeldung:
14.01.81 Patentblatt 81/2

(84) Benannte Vertragsstaaten:
FR GB IT NL SE

(71) Anmelder: Schiller, Johannes
Leeuwarderstrasse 20
D-2800 Bremen 66(DE)

(72) Erfinder: Schiller, Johannes
Leeuwarderstrasse 20
D-2800 Bremen 66(DE)

(74) Vertreter: Schramm, Ewald
Genter Strasse 6
D-2800 Bremen 66(DE)

(54) **Mechanisches Schaltwerkgetriebe zur stufenlosen Drehzahlregelung.**

(57) Die Erfindung bezieht sich auf ein stufenlos regelbares mechanisches Schaltwerkgetriebe. Der Antrieb wird dabei auf eine Verstelleinrichtung übertragen, deren Ausgang ein im Exzenterradius stufenlos verstellbarer Kurbelzapfen ist. Dieser Kurbelzapfen ist mit einem Hubglied gekoppelt, das beim Antrieb Vollkreisbewegungen ausführt. Eine mit dem Hubglied verbundene Zahnstange kämmt dabei mit einem auf einer Vorgelegewelle angeordneten Zahnrad und versetzt die Vorgelegewelle in periodische Pendelbewegungen, deren Hub vom jeweils eingestellten Exzenterradius des Kurbelzapfens abhängt. Die Pendelbewegungen werden dann zur Erzeugung einer kontinuierlichen Drehbewegung über wechselweise wirksame Kupplungen auf eine Ausgangswelle übertragen.

./...

FIG. 1

R 101 EP                    Bremen, den 15.06.1980

Johannes Schiller, Leeuwarder Str. 20, 2800 Bremen 66

Mechanisches Schaltwerkgetriebe zur stufenlosen Drehzahlregelung.

Die Erfindung bezieht sich auf ein mechanisches Schaltwerkgetriebe, bei dem die gleichförmige Drehbewegung einer Eingangswelle über verstellbare Zwischenglieder zur stufenlosen Drehzahlregelung auf eine Ausgangswelle übertragen wird.

Mechanische Schaltwerkgetriebe sind zur stufenlosen Drehzahlregelung in zahlreichen Varianten bekannt. Die verschiedenen Ausführungsformen können dabei als mit Riemen, Keilriemen oder Ketten aufgebaute Umschlingungstriebe oder als
Reibradgetriebe mit veränderlicher Übersetzung ausgebildet
sein. Es ist auch bekannt hydrostatische oder hydrodynamische Drehzahl- bzw Drehmomentenwandler zum stufenlosen Drehzahlregeln zu benutzen, aber derartige Anordnungen lassen
sich nicht universell einsetzen.

Bei stufenlos regelbaren Getrieben besteht die Aufgabe darin, die Kenngrößen der an der Antriebswelle zugeführten
mechanischen Leistung in einem bestimmten Arbeitsbereich
kontinuierlich und willkürlich einstellbar zu wandeln. Soll
z.B. die Drehzahl vermindert werden, dann muß das Drehmo-

- 2 -

ment in gleichem Maße steigen und umgekehrt. Ein stufenlos regelbares Getriebe, bei dem innerhalb des Arbeitsbereiches das Produkt aus Drehzahl und Drehmoment konstant ist, bezeichnet man als echten Wandler. Mit einem solchen stufenlos regelbaren Getriebe ist eine Wandlung der zuvor erläuterten Kenngrößen mit sehr gutem Wirkungsgrad möglich, d.h. das Getrieb arbeitet nahezu verlustfrei.

Ein echter Wandler benutzt zum stufenlosen Drehzahlregeln das Prinzip des veränderbaren Radius d.h. der Hebelarm, an dem die zu übertragende Umfangskraft angreift, wird verändert. Wenn z.B. bei konstanter Umfangskraft und konstanter Umfangsgeschwindigkeit eine Vergrößerung des Radius vorgenommen wird, hat dies ein Sinken der Drehzahl und ein Ansteigen des Drehmomentes zur Folge. Obwohl dieses Prinzip sehr einfach ist, sind stufenlos regelbare Getriebe die nach diesem Prinzip arbeiten äußerst selten. Der Grund hierfür ist in der Tatsache zu sehen, daß sich das Prinzip der Radiusveränderung nur mit Hilfe der Reibung verwirklichen läßt.

Der Erfindung liegt daher die Aufgabe zugrunde ein mechanisches Schaltwerkgetriebe der eingangs genannten Art vorzusehen, bei dem das Prinzip eines echten Wandlers ohne Reibung verwirklicht ist. Diese Aufgabe ist gemäß der Erfindung dadurch gelöst, daß die Eingangswelle des Schaltwerkgetriebes den Antrieb auf einen von einer Verstelleinrichtung im Exzenterradius stufenlos verstellbaren Kurbelzapfen überträgt, der ein mit einem schlupffreien Kraftübertragungselement versehenes Hubglied derart in Vollkreisbewegungen versetzt, daß ein auf einer Vorgelegewelle angeordnetes und mit dem schlupffreien Kraftübertragungselement im Eingriff stehendes Gegenstück periodische Pendelbewegungen ausführt, die

- 5 -

von der Vorgelegewelle über zwei mit der Pendelbewegung wechselweise wirksame Kupplungen und Zwischenglieder auf die Ausgangswelle übertragen werden.

Die erfindungsgemäße Maßnahme ermöglicht den Aufbau eines stufenlos regelbaren Schaltwerkgetriebes, bei dem das Prinzip der Radiusveränderung mit schlupffreien Kraftübertrgungselementen z.B. Zahnstangen und Zahnrädern verwirklicht ist. Der Aufbau und der Wirkungsgrad des starren mechanischen Durchtriebes gewährleisten dabei auch bei hohen Tourenzahlen und großen Leistungen die Funktion eines echten auch beim Drehrichtungswechsel wirksamen Wandlers, welcher gleichzeitig auch als stufenlos regelbare Bremse benutzt werden kann.

In Weiterbildung der Erfindung ist es vorteilhaft das Hubglied auf einer Seite seiner Drehachse mit einer als schlupffreies Kraftübertragungselement wirkenden und mit einem Führungsritzel einer ersten Vorgelegewelle im Eingriff stehenden Zahnstange und auf der anderen Seite mit einem Mitnehmerstab und einem darauf längsverschiebbaren Zahngleitkörper zu versehen, der gleichzeitig auch auf zwei senkrecht zum Mitnehmerstab liegenden Gleitwellen geführt ist und mit seiner Verzahnung an einem Führungsritzel einer zweiten senkrecht zur ersten Vorgelegewelle liegenden Vorgelegewelle kämmt. Die Pendelbewegungen der ersten Vorgelegewelle und die Pendelbewegungen der zweiten Vorgelegewelle werden hierdurch über wechselweise wirksame Kupplungen und Zwischenglieder in einer sich überlappenden Weise auf die Ausgangswelle übertragen.

Bei einer praktischen Ausführungform können die mit der Pendelbewegung wechselweise wirksamen Kupplungen durch jeweils zwei miteinander kämmende schrägverzahnte Zahnräder gebildet sein, die auf der jeweiligen Vorgelegewelle und einer dazu

- 4 -

parallel angeordneten Zwischenwelle angeordnet sind, wobei die in axialer Richtung auf der Zwischenwelle verschiebbar angeordneten schrägverzahnten Zahnräder ein in Axialrichtung wirkendes Kupplungselement aufweisen zum Eingriff in ein axial wirkendes Gegenstück eines auf der Zwischenwelle axial unverschiebbar angeordneten und mit einem Kegelrad der Ausgangswelle kämmenden Kegelrades. Der Winkel der Schrägverzahnung wird dabei zweckmäßigerweise derart bemessen, daß die auf der Zwischenwelle angeordneten schrägverzahnten Zahnräder hierdurch beim Arbeitsgang die zum Kupplungsvorgang durch Axialverschiebung erforderliche Kraft erhalten.

Für die Kupplungselemente der auf den Zwischenwellen axial verschiebbar und unverschiebbar angeordneten Zahnräder können dabei in vorteilhafterweise Axialverzahnungen eingesetzt werden. Es ist aber auch möglich schnellschaltbare und vom Hub des Hubgliedes steuerbare Kupplungen für diesen Zweck einzusetzen. Zum stufenlosen Regeln des erfindungsgemäßen Schaltwerkgetriebes ist dabei eine den Antrieb von der Eingangswelle auf den im Exzenterradius verstellbaren Kurbelzapfen übertragende Verstelleinrichtung vorgesehen. Diese Verstelleinrichtung enthält eine mit der Eingangswelle gekoppelte und parallel zu deren Achsrichtung verschiebbare Zahnstange, die bei ihrer Verstellung die Stellbewegung über Zwischenräder auf eine weitere Zahnstange überträgt, welche an einem in einer Schlittenführung angeordneten und den Kurbelzapfen tragenden Gleitkörper vorgesehen ist. Bei einer Verstellung der mit der Eingangswelle gekoppelten Zahnstange wird somit je nach Stellrichtung der Exzenterradius des Kurbelzapfens und damit über das damit verbundene Hubglied die stufenlose Regelung des Schaltwerkgetriebes bewirkt.

Die Erfindung wird anhand von in der Zeichnung dargestellten Ausführungsbeispielen näher erläutert. Es zeigen:

BAD ORIGINAL

Fig. 1 ein mechanisches Schaltwerkgetriebe im Schnitt,

Fig. 2 eine Draufsicht des Schaltwerkgetriebes nach Fig. 1,

Fig. 3 einen Schnitt III - III gemäß Fig. 1

Fig. 4 eine Verstelleinrichtung im Schnitt,

Fig. 5 ein Schaltwerkgetriebe mit vier Übertragungswegen im Schnitt,

Fig. 6 einen Ausschnitt eines Schaltwerkgetriebes nach Fig. 5,

Fig. 7 einen Schnitt VII - VII gemäß Fig. 6,

Fig. 8 eine Doppelkurbel im Schnitt,

Fig. 9 ein Schaltwerkgetriebe im Schnitt,

Fig. 10a einen Schnitt Xa - Xa gemäß Fig. 9,

Fig. 10b einen Schnitt Xb - Xb gemäß Fig. 9,

Fig. 10c eine Prinzipdarstellung für die Huberzeugung und die Schaltpunkte der Kupplungen,

Fig. 11 ein Ausführungsbeispiel für ein Flachführungsglied,

Fig. 12 ein anderes Ausführungsbeispiel für ein Flachführungsglied,

Fig. 13 ein weiteres Ausführungsbeispiel für ein Flachführungsglied,

Fig. 14 ein Schaltwerkgetriebe mit zwei getrennten Ausgangswellen,

Fig. 15 einen Ausschnitt eines Schaltwerkgetriebes,

Fig. 16 einen Teilschnitt XVI-XVI des Schaltwerkgetriebes nach Fig. 15,

Fig. 17 einen Ausschnitt eines weiteren Schaltwerkgetriebes mit wechselweise wirksamen Kupplungen,

Fig. 18 einen weiteren Ausschnitt eines Schaltwerkgetriebes mit wechselweise wirksamen Kupplungen,

Fig. 19 einen Schnitt IXX - IXX gemäß Fig. 18 und

Fig. 20 einen Ausschnitt eines Schaltwerkgetriebes zur Umwandlung einer Pendelbewegung in eine kontinuierliche Drehbewegung.

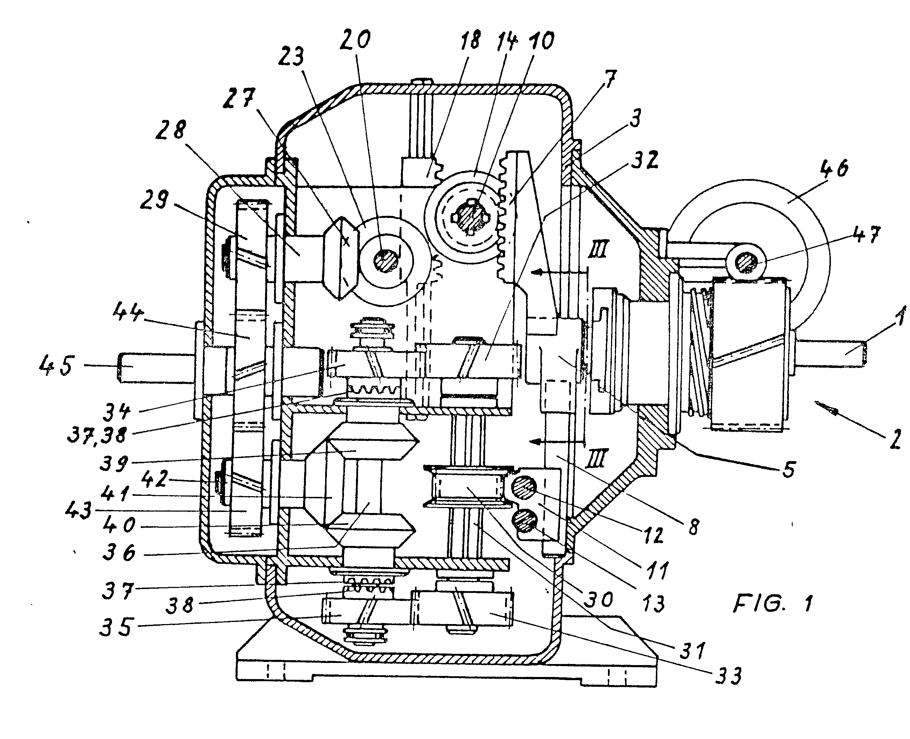

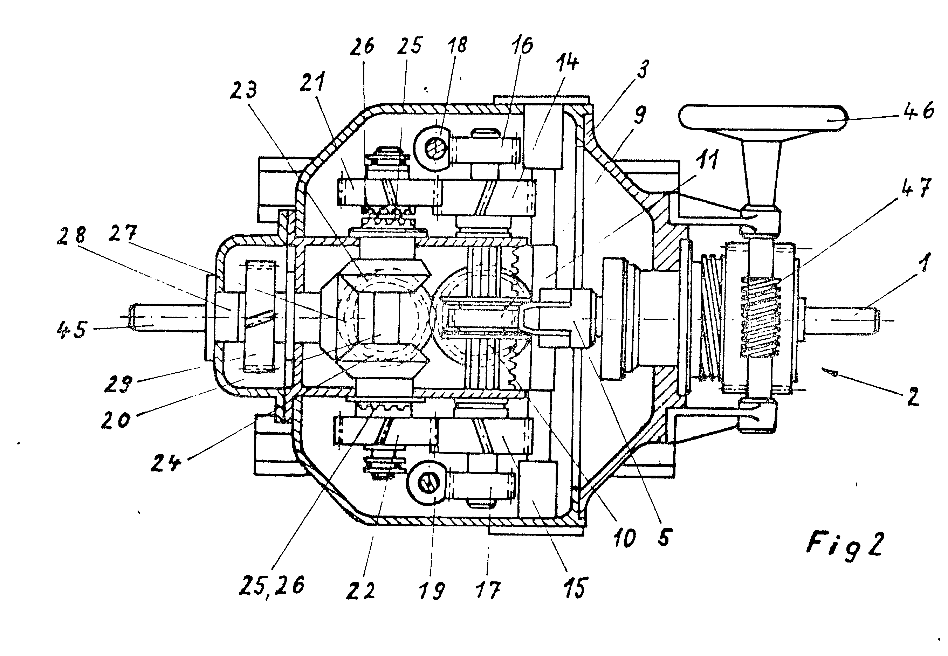

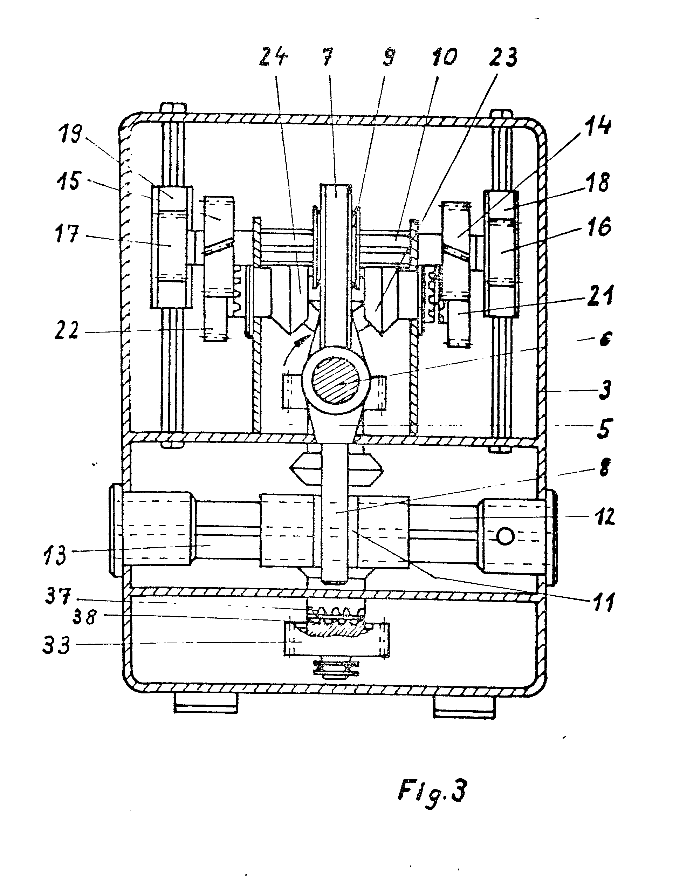

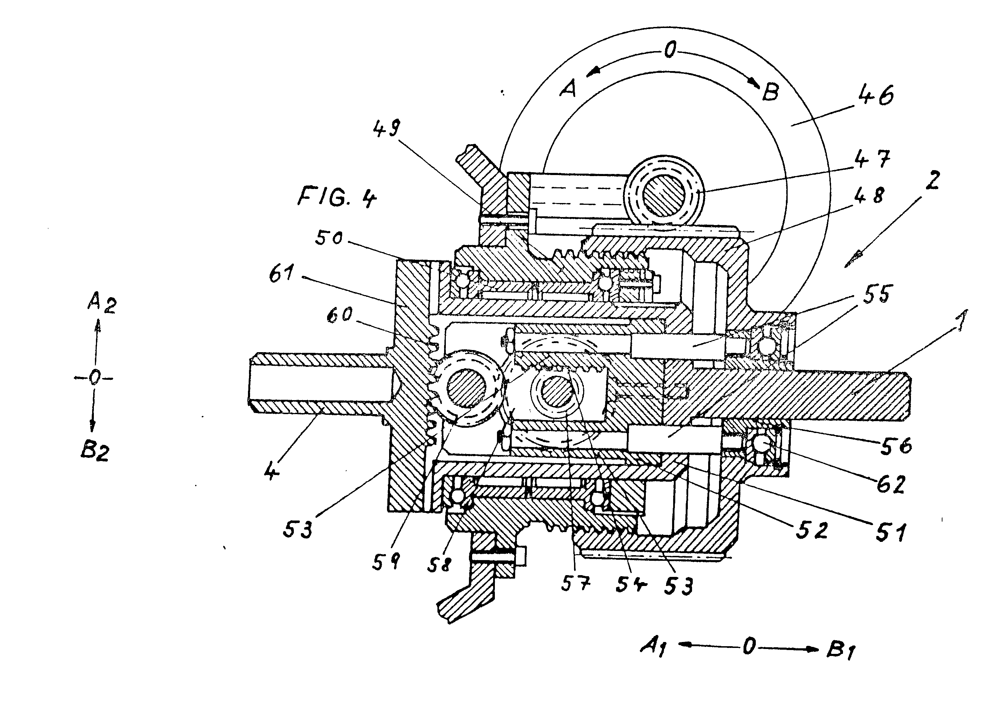

Wie aus den Darstellungen nach Fig. 1 bis 3 hervorgeht, überträgt eine Eingangswelle 1 den Antrieb über eine Verstelleinrichtung 2 auf das in einem Getriebegehäuse 3 untergebrachte Schaltwerkgetriebe. Das Ausgangsglied der im Zusammenhang mit der in Fig. 4 noch zu erläuternden Verstelleinrichtung 2 ist ein im Exzenterradius verstellbarer Kurbelzapfen 4 der mit einem Wellenstutzen 6 eines Hubgliedes 5 in einer formschlüssigen Verbindung steht. Dieses Hubglied 5 ist ein stabförmiges Bauelement, das auf einer Seite als Zahnstange 7 und auf der anderen Seite als glatter Mitnehmerstab 8 ausgebildet ist. In seinem Mittelteil trägt das Hubglied 5 den Wellenstutzen 6. Die Zahnstange 7 des Hubgliedes 5 kämmt an einem Führungsritzel 9 einer Vorgelegewelle 10, während der glatte Mitnehmerstab 8 einen Zahngleitkörper 11 trägt, der auch noch in zwei paralel angeordneten und senkrecht zum Mitnehmerstab 8 liegenden Gleitwellen 12,13 geführt ist.

Die mit bekannten Mitteln gelagerte Vorgelegewelle 10 trägt zu beiden Seiten jeweils ein schrägverzahntes Zahnrad 14, 15 und jeweils ein mit einem Zahngleitkörper 18,19 im Eingriff stehendes Zahnrad 16,17. Von den schrägverzahnten Zahnrädern 14,15 wird der Antrieb auf eine Zwischenwelle 20 übertragen und zwar über zwei schrägverzahnte Zahnräder 21,22, die mit den schrägverzahnten Zahnrädern 14,15 der Vorgelegewelle 10 im Eingriff stehen. Die schrägverzahnten Zahnräder 21,22 sind axial verschiebbar auf der Zwischenwelle 20 angeordnet und übertragen nur dann das Drehmoment auf zugeordnete und auf der Zwischenwelle 20 gelagerte Kegelzahnräder 23,24 wenn sie an diese angekuppelt sind. Zu diesem Zweck sind sowohl die schrägverzahnten Zahnräder 21,22 als auch die Kegelzahnräder 23,24 mit als Kupplungselemente wirkenden axialen Verzahnungen 25,26 versehen, welche ein wechselweises An-und Abkuppeln ermöglichen. Mit den Kegelzahnrädern 23,24 steht ein gemeinsames Kegelzahnrad 27 im Eingriff, das auf einer zum Ausgang führenden Welle 28 sitzt.

Neben dem beschriebenen Übertagungsweg besitzt das Schaltwerkgetriebe einen zweiten Übertragungsweg, der vom Zahngleitkörper 11 des Hubgliedes 5 ausgeht. Dieser Zahngleitkörper 11 kämmt ebenfalls an einem Führungsritzel 30, das auf einer zur ersten Vorgelegewelle 10 senkrecht angeordneten zweiten Vorgelegewelle 31 axial verschiebbar angeordnet ist. Auch diese Vorgelegewelle 31 ist mit bekannten Mitteln gelagert und trägt an ihren beiden Enden je ein schrägverzahntes Zahnrad 32,33. Mit diesen schrägverzahnten Zahnrädern steht jeweils ein weiteres schrägverzahnts Zahnrad 34,35 im Eingriff, die auf einer zweiten Zwischenwelle 36 axial verschiebbar angeordnet sind. Beide Zahnräder 34,35 besitzen Verzahnungen 37, die in axiale Verzahnungen 38 zweier auf der Zwischenwelle 36 gelagerter Kegelzahnräder 39,40 zum wechselweisen Ankuppeln eingreifen. Mit den beiden Kegelzahnrädern 39,40 steht ein weiteres Kegelzahnrad 41 im Eingriff, das den Antrieb auf eine Welle 42 überträgt. Sowohl von dieser Welle 42 als auch von der Welle 28 wird der Antrieb mit jeweils einem Zahnrad 43, 29 auf ein Zahnrad 44 übertragen, das auf der Ausgangswelle 45 sitzt.

Zum stufenlosen Regeln des erfindungsgemäßen Schaltwerkgetriebes wird die bereits erwähnte Verstelleinrichtung 2 nach Fig. 4 benutzt. Diese Verstelleinrichtung 2 hat als Eingang die Getriebeeingangswelle 1 und als Ausgang den in seinem Exzenterradius verstellbaren Kurbelzapfen 4. Außerdem ist für die Einstellung ein als Handrad ausgebildetes Stellorgan 46 vorgesehen, mit dem über eine Schnecke 47 eine Außenverzahnung einer Verstellhülse 48 und damit die Verstellhülse verstellt werden kann. Diese Verstellhülse 48 besitzt ein Innengewinde, mit dem sie auf ein Außengewinde einer am Getriebegehäuse 3 befestigten Lagerbuchse 49 auf- und/oder abschraubbar ist. In die Lagerbuchse 49 ist ein Kugellager 50 eingesetzt, das in seiner Innenbohrung das als Hohlwelle ausgebildete Ende der Eingangswelle 1 aufnimmt. Ein U-förmiges Verstellglied 52, das auf der Innenseite eines Schenkels 53 als Zahnstange 54 ausgebildet ist, ist in die Bohrung des Hohlzylinders 51 eingesetzt, wobei zwei in den Schenkeln 53 eingesetzte Spindeln 55 durch Bohrungen im Boden des Hohlzylinders 51 durchgreifen und an einer Stützbuchse 56 befestigt sind. Die Stützbuchse 56 ist dabei über die Eingangswelle 1 gestreift und im Boden der die Form einer Überwurfmutter aufweisenden Verstellhülse 48 fixiert. In der Bohrung des Hohlzylinders 51 sind neben dem U-förmigen Verstellglied 52 noch drei Zahnräder 57,58,59 gelagert, wobei das mit der Zahnstange 54 im Eingriff stehende Zahnrad 56 auf einer gemeinsamen Welle mit dem Zahnrad 58 sitzt. Das Zahnrad 58 kämmt mit einem Zahnrad 59 das seinerseits in eine Zahnstange 60 eingreift. Diese Zahnstange 60 ist an einem in einer Schlittenführung angeordneten Gleitkörper 61 vorgesehen, der auf der der Zahnstange 60 abgewandten Seite den Kurbelzapfen trägt. Die Schlittenführung ist dabei an der Stirnseite des Hohlzylinders 51 der Eigangswelle 1 vorgesehen.

Bei einer Verstellung des Handrades in Richtung des Pfeiles A wird die Verstellhülse 48 weiter aufgeschraubt, während sie bei einer Verstellung in Richtung B abgeschraubt wird. Ein Drehen des Handrades in Richtung A bedeutet somit, daß die Spindeln 55, welche sich an der Stützbuchse 56 und dem dahinter angeordneten Drucklager 62 abstützen, das U-förmige Verstellglied 52 in Richtung $A_1$ und damit die Zahnstange 54 ebenfalls in Richtung $A_1$ bewegen. Das hat über die Zahnräder 57,58 und 59 eine Verstellung der Zahnstange 60 am Gleitkörper 61 in Richtung $A_2$ zur Folge. Bei einer Verstellung aus dem Nullpunkt in Richtung A bedeutet dies Rechtslauf, unabhängig vom eingestellten Abstand. Umgekehrt bedeutet eine Verstellung vom Nullpunkt in Richtung B Linkslauf.

Zur Einstellung des Schaltwerkgetriebes wird somit der Kurbelzapfen 4 durch das Handrad 46 je nach gewünschter Drehrichtung eingestellt, wodurch er bei angetriebener Eingangswelle 1 das Hubglied 5 in Vollkreisbewegungen versetzt, d.h. das stabförmige Hubglied 5 macht dabei horizontale und vertikale Hubbewegungen. Diese Hubbewegungen werden auf die Führungsritzel 9 der Vorgelegewelle 10 bzw 30 der Vorgelegewelle 31 übertragen, deren Ausschlag vom eingestellten Exzenterradius des Kurbelzapfen 4 abhängen. Über die schrägverzahnten Zahnräder 14,15;32,33 die an den beiden Enden der Vorgelegewellen 10,31 angeordnet sind, werden diese Pendelbewegungen auf die schrägverzahnten Zahnräder 21,22;34,35 der Zwischenwellen übertragen. Die wechselweise wirksamen Kupplungen, wofür beim vorliegenden Ausführungsbeispiel axiale Verzahnungen 25,26;37,38 eingesetzt sind, sichern dabei daß stets nur die Antriebsbewegungen in gleicher Richtung übertragen werden. Dabei wird die für den jeweiligen Kupplungsvorgang erforderliche axiale Kraft automatisch und zwar durch die Schrägverzahnung der entsprechenden Zahnräder gewonnen. Hierzu ist es lediglich notwendig den Winkel der Schrägverzahnung so zu bemessen, daß sich der gewünschte Erfolg, nämlich

$$P = U \cdot \tan ß \qquad \text{ergibt.}$$

Dabei bedeuten: P = Kraft in axialer Richtung U = Umfangskraft am schrägverzahnten Zahnrad ß = Winkel der Schrägverzahnung

- 10 -

Der Funktionsablauf im Schaltwerkgetriebe ist dabei so, daß sich die Antriebe am Ausgang jeweils zur Hälfte überlagern, d.h. die jeweils weitergegebene Pendelbewegung der ersten Vorgelegewelle überlappt sich mit der weitergegebenen Pendelbewegung der zweiten Vorgelegewelle. Der Rundlauf des Getriebes wird dabei durch die Zahngleitkörper 18,19 gewährleistet, welche einen Massen-ausgleich bewirken. Diese Zahngleitkörper 18, 19 sind auf Spindeln geführt und die kämmen mit ihren Zahnstangen an den Zahnrädern 15,16 der Vorgelegewelle 10.

Das erfindungsgemäße Schaltwerkgetriebe hat den Vorteil als echter Wandler innerhalb seines gesamten stufenlos überstreichbaren Arbeitsbereiches zu wirken. Dieses Funktionsprinzip macht das Schaltwerkgetriebe auch zu einem integrierten Bremssystem, weil beim Regeln von Vollast auf Null der Ausgang unabhängig von der Drehrichtung auf Null zurückgefahren wird. Das Prinzip eines echten Wandlers d.h. eines Wandlers, bei dem der Radius für den Angriffspunkt der Kraft stufenlos verändert wird, ist beim erfindungsgemäßen Schaltwerkgetriebe ohne Reibung sondern mit schlupffreien Kraftübertragungselementen verwirklicht.

Wie bereits bei der Erläuterung der Verstelleinrichtung 2 erwähnt, dient der verstellbare Kurbelzapfen 4 auch zum Einstellen der Drehrichtung. Maßgebend ist hierfür die Richtung in welcher der Kurbelzapfen 4 bei seiner Verstellung aus dem Nullpunkt bewegt wird, weil hierdurch für das Hubglied 5 die Richtung des ersten Hubes bestimmt wird. Die wechselweise wirksamen Kupplungen, welche den Antrieb von den Zwischenwellen zum Ausgang durchschalten arbeiten dann gegenüber der anderen Drehrichtung genau phasenverkehrt. Für diese Kupplungen können auch schnellschaltbare Kupplungen eingesetzt werden, welche zweckmäßigerweise in Abhängigkeit vom Hub des Hubgliedes 5 zu steuern wären. Als schnellschaltbare Kupplungen kämen z.B. in Frage Klauen-,

- 11 -

Konus-, Lamellen-, Magnet-, sowie öl- oder luftgesteuerte Kupplungen. Das erfindungsgemäße Schaltwerkgetriebe kann auch als Verteilergetriebe eingesetzt werden, wobei der Antrieb zweckmäßigerweise von den Wellen 28 oder 40 abzunehmen wäre um auf getrennte Wege weitergegeben zu werden.

Das erfindungsgemäße stufenlos regelbare Schaltwerkgetriebe hat bei seiner Anwendung den Vorteil, daß die jeweilige Antriebsmaschine in ihrem günstigsten Arbeitsbereich und kupplungslos betrieben werden könnte. Dieser Vorteil ist besonders für Kraftfahrzeuge von Bedeutung, weil hierdurch der Treibstoffverbrauch gegenüber der bisher angewandten Technik, und zwar in der Größenordnung von bis zu 50% gesenkt werden könnte. Das ist auch für die Umweltbelastung ein beachtlicher Fortschritt.

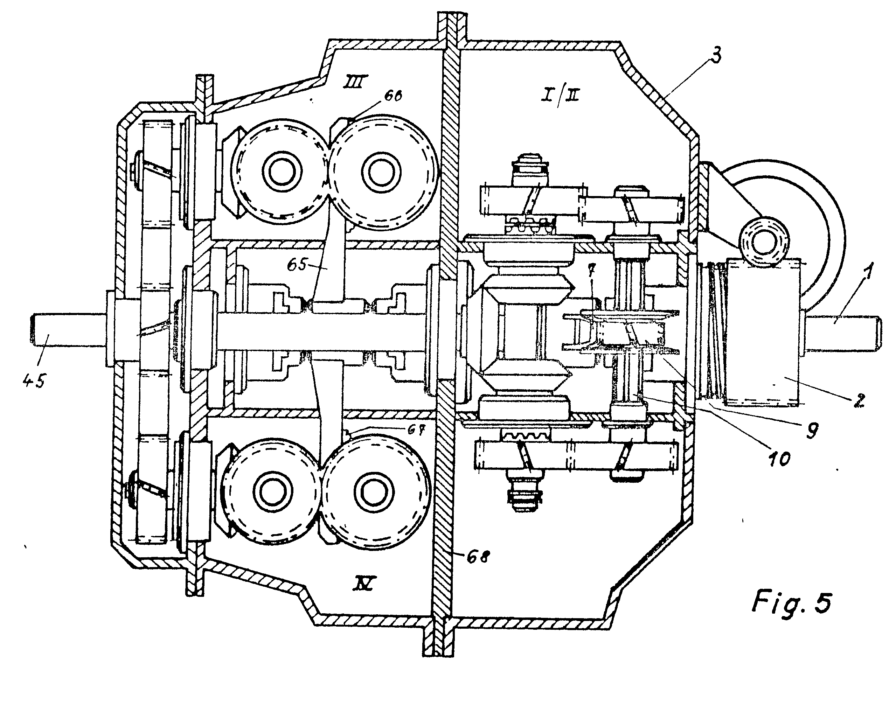

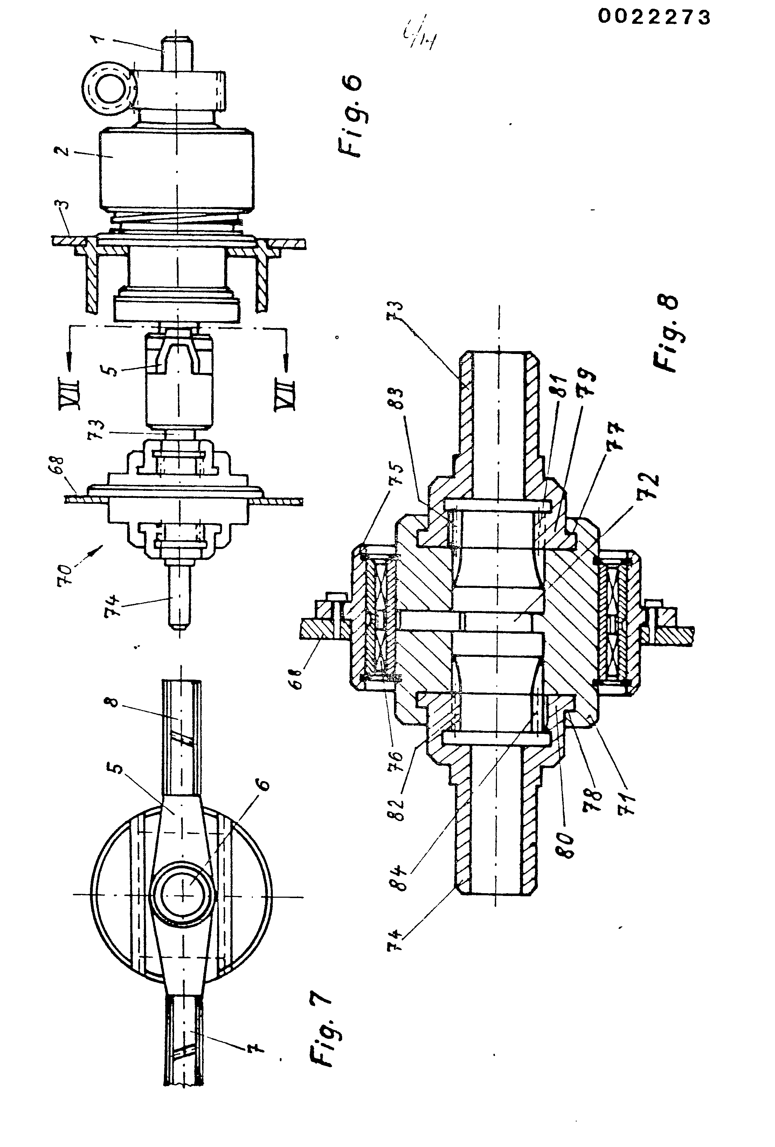

Bei der Darstellung nach Fig.5 überträgt eine Eingangswelle 1 den Antrieb über eine Verstelleinrichtung 2 auf das in einem Getriebegehäuse 3 untergebrachte regelbare Schaltwerkgetriebe. Das Ausgangsglied der Verstelleinrichtung 2 ist der verstellbare Kurbelzapfen 4, dessen Einzelheiten wegen der Übereinstimmung mit Fig.4 nicht näher dargestellt sind. Aus Fig.6 ist dabei zu erkennen, daß der Kurbelzapfen 4 mit einem Wellenstutzen 6 des Hubgliedes 5 in einer formschlüssigen Verbindung steht. Wie in Fig.1 bis Fig.3 versetzt das mit einer Zahnstange 7 versehene Hubglied 5 über ein Führungsritzel 9 eine Vorgelegewelle 10 in Pendelbewegungen, die über wechselweise wirksame Kupplungen zur Erzeugung einer kontinuierlichen Drehbewegung auf die Ausgangswelle 45 übertragen werden. Es entsteht somit ein zum Ausgang führender Übertragungsweg, der um weitere Wiederholungen zu vermeiden, mit I bezeichnet ist. Ein mit dem ersten Übertragungsweg I identischer zweiter Übertragungsweg II wird von einer zweiten Zahnstange 8 des Hubgliedes 5 angetrieben und führt ebenfalls zur Ausgangswelle 45. Der zwei-

te Übertragungsweg II liegt direkt unter dem ersten Übertragungsweg I und ist daher in Fig.5 nicht zu erkennen.

Fig.6 und Fig. 7 zeigen einen Ausschnitt des Schaltwerkgetriebes nach Fig.5 mit der Verstelleinrichtung 2, dem vom Kurbelzapfen 4 verstellbaren Hubglied 5 und einer damit gekoppelten Doppelkurbel 70. Über diese in Fig.8 näher dargestellte Doppelkurbel 70 wird ein zweites Hubglied 65 beim Antrieb in Vollkreisbewegungen versetzt. Hiermit können wie Fig.5 zeigt mit den daran vorgesehenen Zahnstangen 66,67 zwei weitere Übertragungswege III,IV angetrieben werden. Diese Übertragungswege III IV unterscheiden sich grundsätzlich nicht von den Übertragungswegen I,II wenn man davon absieht, daß die zum Massenausgleich vorgesehenen Maßnahmen hier entfallen, da die symmetrische Anordnung der vier Übertragungswege dies automatisch bewirkt. Auf eine weitere Erläuterung der Übertragungswege III,IV wird daher verzichtet und nur der Aufbau und die Wirkungsweise der Doppelkurbel 70 und das damit gekoppelte Hubglied erläutert.

Die Doppelkurbel 70 nach Fig.8 besteht aus einer Lagerbuchse 71 welche mit einer darin gelagerten Triebwelle 72 zwei im Exzenterradius verstellbare Kurbelzapfen 73,74 koppelt. Die Lagerbuchse 71 ist dabei an einer Zwischenwand 68 des Getriebegehäuses 3 mit einer die Buchse aufnehmenden Befestigungshülse 75 befestigt. Zur Ausschaltung von Reibung ist dabei in der Befestigungshülse 75 noch ein Gleitlager 76 vorgesehen, welches in seiner Bohrung die Lagerbuchse 71 enthält. Zwei Führungnuten 77,78 die auf jeder Stirnseite der Lagerbuchse 71 in zueinander paralleler Weise vorgesehen sind, dienen zur Aufnahme je eines an den Kurbelzapfen 73,74 vorgesehenen Führungskopfes 79,80. Diese Führungsköpfe besitzen auf ihren Innenseiten jeweils eine Zahnstange 81,82 und sind in die Führungsnuten 77,78 so eingesteckt, daß sich die Zahnstangen 81,82 diagonal gegenüberlie-

- 13 -

gen. Hierdurch wird bewirkt, daß eine in die Axialbohrung der Lagerbuchse 71 eingesteckte und an ihren beiden Enden je eine Verzahnung aufweisende Triebwelle 72 mit den Zahnstangen 81, 82 derart gekoppelt ist, daß die Kurbelzapfen 73,74 bei ihrer Verstellung in zueinander entgegengesetzter Richtung bewegt werden. Verstellungen des Kurbelzapfens 4 durch die Verstelleinrichtung 2 haben somit eine gleichmäßige Verstellung der Kurbelzapfen 73,74 der Doppelkurbel 71 zur Folge, da der Kurbelzapfen 73 mit dem Hubglied gekoppelt ist. Durch diese Kopplung wird stets eine gleichmäßige stufenlose Verstellung der einzelnen Übertragungswege I,II,III,IV gewährleistet, so daß die Zusammenführung der Einzelwege auf die Ausgangswelle 45 ohne Schwierigkeiten mit Zahnrädern möglich ist.

Das stufenlos regelbare Schaltwerkgetriebe mit den vier Übertragungswegen ist daher besonders zur Übertragung großer Leistungen geeignet. Es ist aber auch möglich dieses Schaltwerkgetriebe als Verteilergetriebe zu benutzen, in dem die Übertragungswege nicht einem gemeinsamen Ausgang sondern getrennten Ausgängen zugeleitet werden. Ein besonderer Vorteil ist auch die Tatsache, daß Maßnahmen zum Massenausgleich nicht nötig sind, da die symmetrische Anordnung der Übertragungswege dies automatisch bewirkt. Dabei ist die Verstellung des Hubgliedes 65 auch mit zwei Verstelleinrichtungen oder mit zwei Übertragungswegen und einer Verstelleinrichtung möglich.

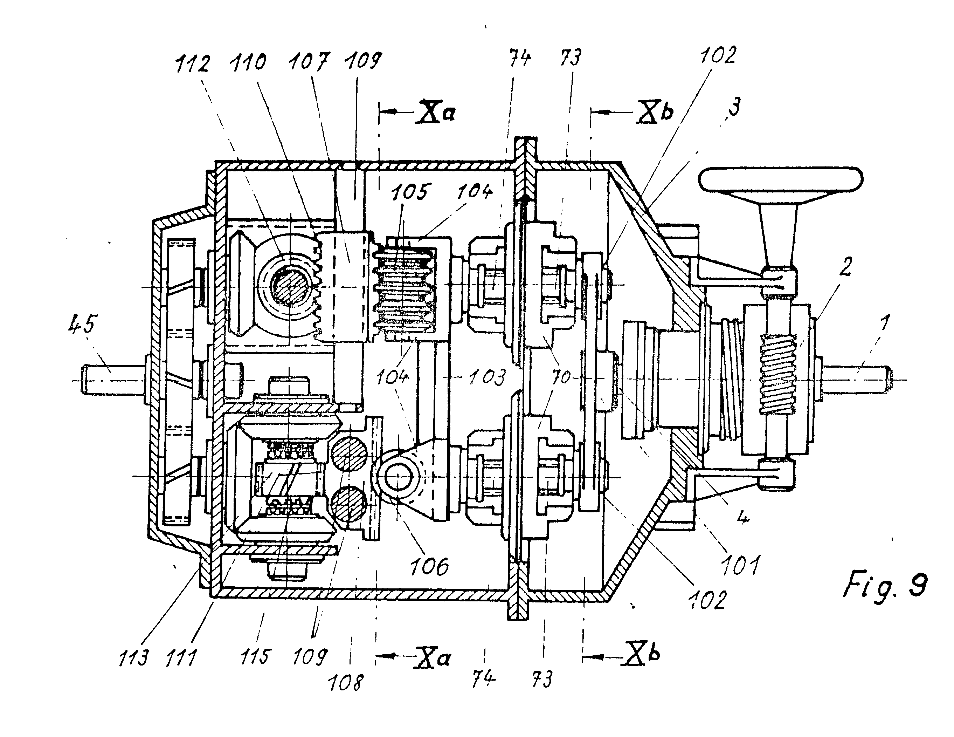

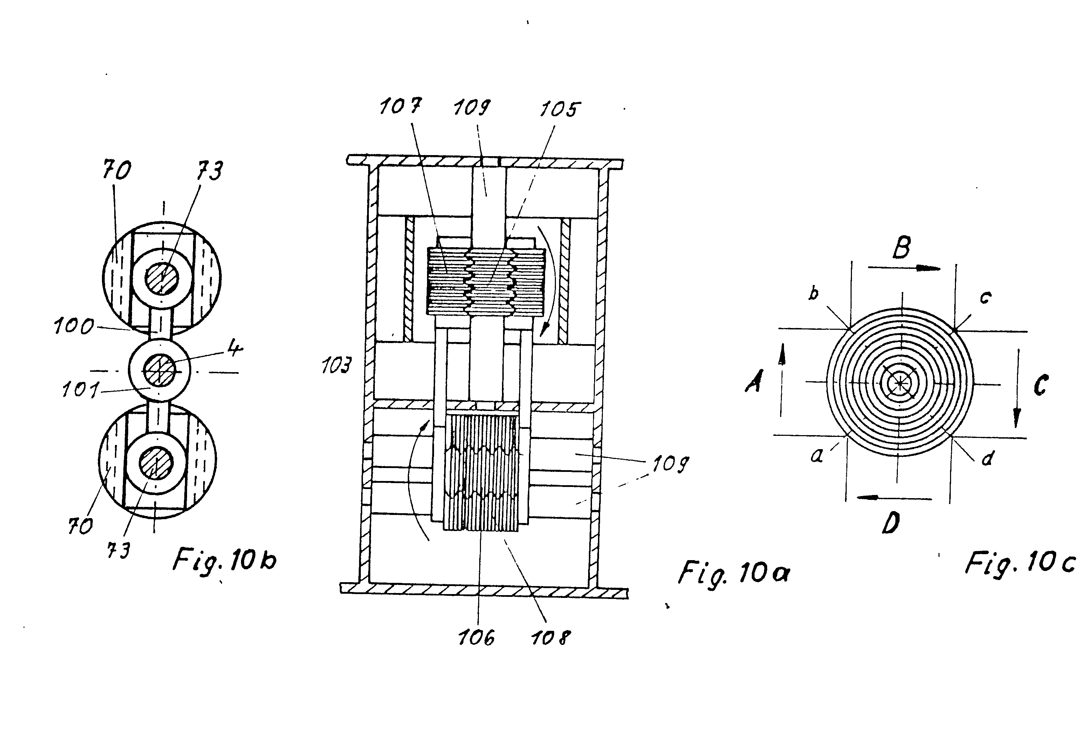

In den Darstellungen nach Fig. 9 und 10 überträgt eine Eingangswelle 1 den Antrieb über eine Verstelleinrichtung 2 auf das in einem Gehäuse 3 untergebrachte regelbare Schaltwerkgetriebe. Das Ausgangsglied der Verstelleinrichtung ist wie bei den bisherigen Ausführungsbeispielen der in seinem Exzenterradius verstellbare Kurbelzapfen 4, dessen Einzelheiten daher nicht näher dargestellt sind. Aus Fig. 10b ist dabei zu erkennen, daß der Kurbelzapfen 4 mit einem Wellenstutzen 101

- 14 -

eines Kurbelstabes 100 in einer formschlüssigen Verbindung
steht. Der in seiner Mitte den Wellenstutzen 101 aufweisende
Kurbelstab 100 ist mit dem Wellenstutzen 101 am Kurbelzapfen 4 drehbar gelagert.

An seinen beiden Enden besitzt dieser Kurbelstab 100 je eine
als Koppelelement dienende Lagerbuchse 102, in die jeweils
ein Kurbelzapfen 73 je einer Doppelkurbel 70 eingreifen. Die
Doppelkurbel 70 ist in Fig. 6 bis Fig. 8 beschrieben, und
wird daher in diesem Zusammenhang nicht näher erläutert. Mit
dem zweiten Kurbelzapfen 74 der Doppelkurbel 70 wird der Antrieb wie nachfolgend beschrieben auf getrennten Übertragungswegen I,II zur Ausgangswelle übertragen.

Die Übertragungswege I,II setzen sich von den zweiten Kurbelzapfen 74 der Doppelkurbeln 70 fort, in dem jeder Kurbelzapfen 74 in einer Buchse eines Hubgliedes 103 eingreift.
Das Hubglied 103 besteht aus einem stabförmigen Körper, der
an seinen beiden Enden neben den Buchsen zur Kopplung an die
Kurbelzapfen 74 jeweils zwei senkrecht zueinander stehende
Laschen besitzt. Zwischen den Laschen 104 jeweils eines Endes sind dabei je eine Zahnrolle 105,106 drehbar gelagert,
die mit ihren Zähnen in die mit einer Verzahnung versehene
Rückseite je eines Zahngleitkörpers 107,108 eingreifen. Beide Zahngleitkörper 107,108 sind jeweils in Gleitstangen 109
geführt und besitzen auf ihrer Vorderseite jeweils eine Zahnstange 110,111. Diese Zahnstangen kämmen jeweils an einem
Führungsritzel 112,113 welche auf je einer Vorgelegewelle 114
115 sitzen. Wie bei den bisherigen Ausführungsbeispielen versetzt daher beim Antrieb das Hubglied 103 über die Zahnrollen
105,106 und die Zahngleitkörper 107,108 die Führungsritzel
112,113 in Pendelbewegungen, die über wechselweise wirksame
Kupplungen zur Erzeugung einer kontinuierlichen Drehbewegung

- 15 -

BAD ORIGINAL

auf die Ausgangswelle 45 übertragen werden. Dabei rollen die Zahnrollen aufgrund des bei der Huberzeugung entstehenden seitlichen Versatzes in der Verzahnung auf der Rückseite der Zahngleitkörper 107,108 ab und vermindern damit sehr stark die sonst auftretende Reibung.

Wie aus Fig. 10c zu ersehen ist, schalten die wechselweise wirksamen Kupplungen an den Punkten a,b,c und d. Das Hubglied 103 führt dabei im Rahmen der Vollkreisbewegungen zwei Hübe und zwar die Hübe A/C und B/D aus. Die Hübe A und B bilden dabei den Vorhub, während die Hübe C und D den Rückhub bilden. Je nach Verstellung des Hubgliedes 103 aus seiner Nullposition, werden entsprechend große Hübe und damit auch entsprechende Pendelhübe für die Vorgelegewellen 114,115 eingestellt, wodurch sich die stufenlose Regelung des Schaltwerkgetriebes ergibt. Beim Antrieb ist daher immer eine Kupplung wirksam und damit eine unterbrechungsfreie Übertragung gewährleistet.

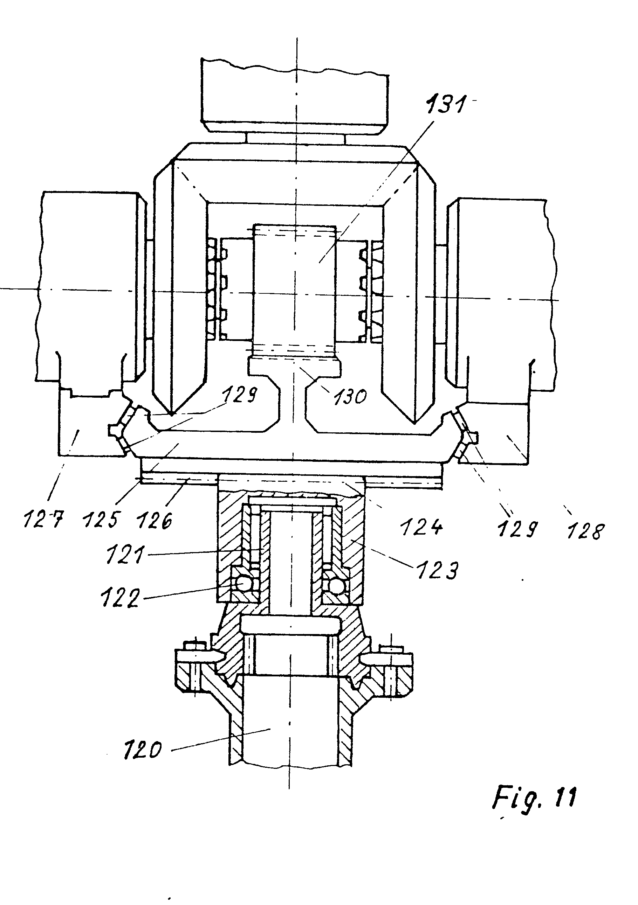

In der Darstellung nach Fig. 11 ist ein Ausschnitt eines Schaltwerkgetriebes zu sehen, das eine andere Kopplung des Hubgliedes an das Führungsritzel eines Übertragungsweges zeigt. Dabei geht der Antrieb von einem Zapfen 120 eines nicht näher dargestellten Hubgliedes aus, der über eine ein Drucklager 122 tragende Buchse 121 auf eine Antriebsbuchse 123 übertragen wird. Diese Antriebsbuchse 123 ist über das Drucklager 122 gestülpt und besitzt auf ihrer Stirnseite eine Verzahnung 124, welche in eine Verzahnung 126 eines Flachführungsgliedes 125 eingreift. Das Flachführungsglied 125 ist nach Art einer Schwalbenschwanzführung ausgebildet und zwischen zwei Führungsschienen 127,128 angeordnet. Zur Verminderung der Reibung sind dabei Rollen 129 vorgesehen, welche jeweils zwischen das Flachführungsglied 125 und den Führungsschienen 127,128 eingesetzt sind. Mit einer Zahnstange 130 welche der Verzahnung 126 des Flachführungsgliedes 125 gegenüberliegt, ist der Antrieb auf ein damit kämmendes Führungsritzel 131 übertragen. Der weitere Aufbau des Schaltwerkgetriebes unterscheidet sich dann nicht mehr von den bisherigen Ausführungsbeispielen. Beim Antrieb versetzt daher das nicht näher dargestellte Hubglied den Zapfen 120 in Vollkreisbewegungen, wodurch über die Antriebsbuchse 123 das Flachführungsglied 125 zu Hubbewegungen veranlaßt wird. Der hierbei bei der Antriebsbuchse 123 auftretende seitliche Versatz wird dabei durch Gleiten der Verzahnung 124 in der Verzahnung 126 aufgefangen. Über den Hub des Führungsgliedes 125, dessen Ausmaß von der Verstellung des Kurbelzapfens abhängt, wird dabei die stufenlose Regelung vorgenommen.

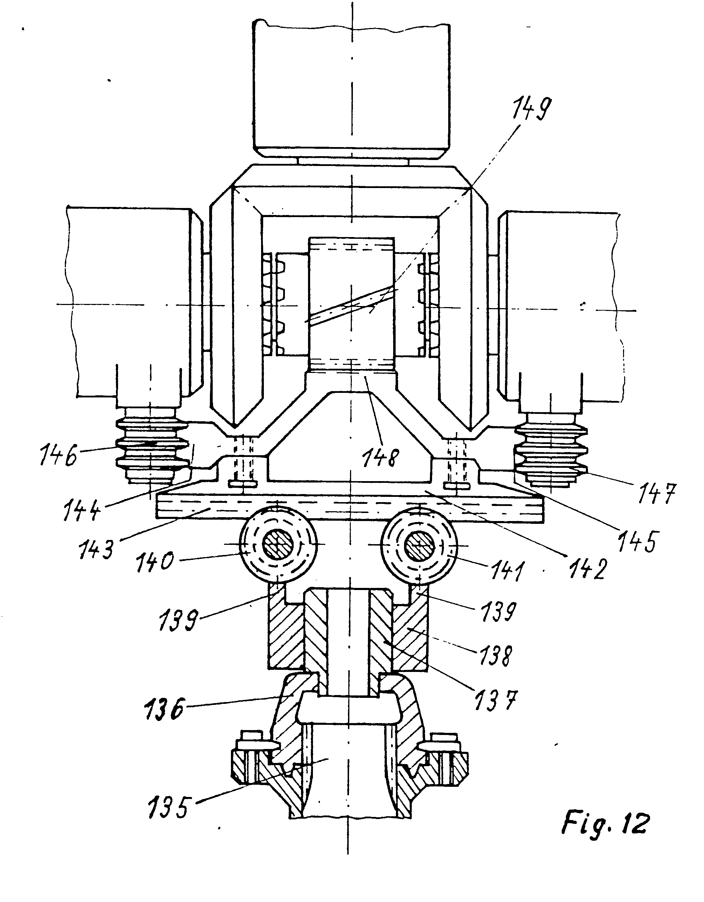

Ein weiteres Ausführungsbeispiel für die Übertragung des Antriebes von einem Hubglied auf ein Führungsritzel einer Vorgelegewelle zeigt Fig.12. Hier ist ein Zapfen 135 eines nicht näher dargestellten Hubgliedes vorgesehen, an dem eine Koppelhülse 136 befestigt ist. An dieser Koppelhülse 136 ist ein Lagerstutzen 137 angebracht, als Lager für einen drehbaren Lagerbock 138. Dieser Lagerbock 138 besitzt vier Lagerlaschen 139, und zwar jeweils zwei gegenüberliegend zur Aufnahme zweier Zahnrollen 140,141. Mit diesen Zahnrollen 140,141 ist der Antrieb auf ein Flachführungsglied 142 übertragen, weil diese Zahnrollen 140,141 an einer Verzahnung 143 dieses Flachführungsgliedes 142 kämmen. Das Flachführungsglied 142 besitzt seitliche Längsverzahnungen 144,145 die als Führungsschienen wirken. In diese Längsverzahnungen 144, 145 greifen zu beiden Seiten Zahnrollen 146,147 zur Führung ein und gewährleisten damit eine rollende Führung. Eine Zahnstange 148, die an dem Flachführungsglied 142 vorgesehen ist, überträgt den Antrieb auf ein Führungsritzel 149, von dem der Antrieb wie bei den bisherigen Ausführungsbeispielen zur Ausgangswelle weitergeht.

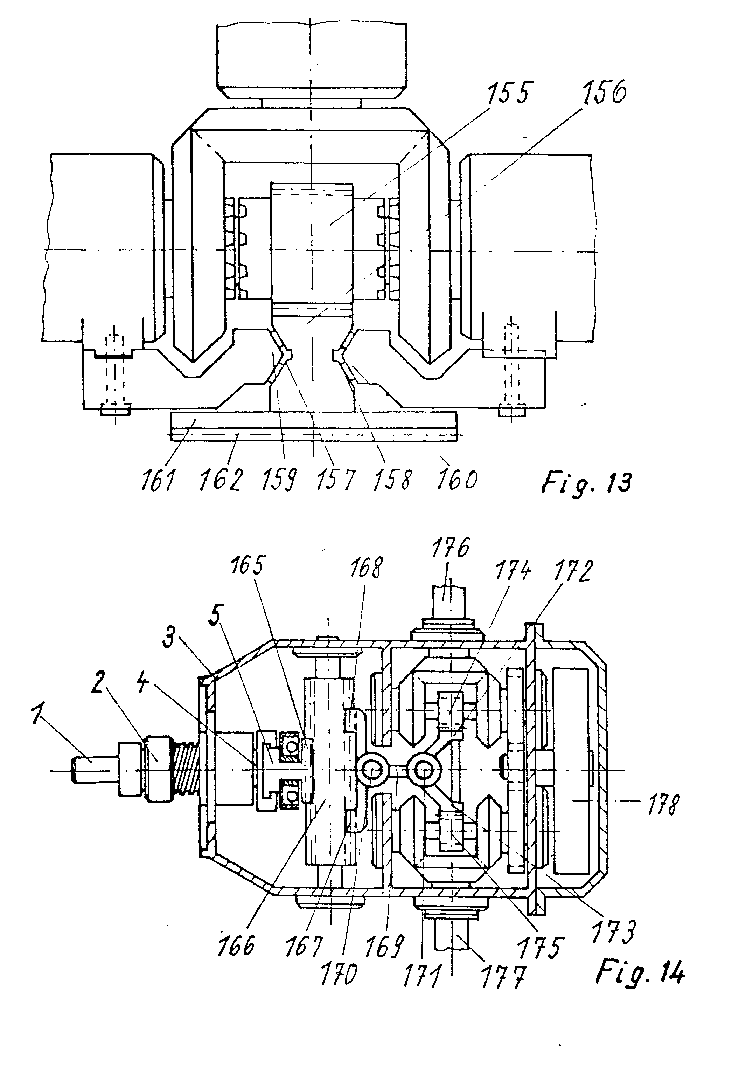

Die Übertragung des Antriebes kann weiterhin auf die in Fig. 13 dargestellte Weise erfolgen. Dort ist eine an einem Führungsritzel 155 kämmende Zahnstange 156 vorgesehen, die seitliche Rollenführungen 157,158 aufweist. Zwei entsprechend ausgebildete Gegenstücke 159,160, die im Gehäuse 3 angebracht sind, gewährleisten dabei die gewünschte Führung. Die Zahnstange 156 wird über eine Verzahnung 162 zu Hubbewegungen veranlaßt, die an einem mit der Zahnstange 156 gekoppelten Zwischenglied 161 vorgesehen ist. Das Zwischenglied 161 kann dabei wie die Flachführungsglieder 125 bzw 142 nach Fig. 11 oder nach Fig. 12 angetrieben werden.

Das erfindungsgemäße Schaltwerkgetriebe kann auch zum Antrieb zweier getrennter Ausgangswellen benutzt werden. In der Darstellung nach Fig. 14 ist ein Schaltwerkgetriebe zu sehen, bei dem der Antrieb von einer Eingangswelle 1 über eine Verstelleinrichtung 2 auf einen verstellbaren Kurbelzapfen 4 gelangt. Der Kurbelzapfen 4 ist dabei mit einem Hubglied 5 wie bei den bisherigen Ausführungsbeispielen gekoppelt und kämmt mit einer daran vorgesehenen Zahnstange 165 an einem walzenförmigen Zahnrad 166. Dieses walzenförmige Zahnrad 166 dient dabei zur Aufnahme des beim Antrieb auftretenden seitlichen Versatzes. Von dem walzenförmigen Zahnrad 166 wird der Antrieb auf zwei Zahnstangen 167,168 übertragen, die brückenförmig an einem Führungsglied 169 angeordnet sind. Das Führungsglied 169 ist in zwei Gleitstangen 170,171 geführt und treibt mit zwei weiteren Zahnstangen 172,173 zwei gegenüberliegende Führungritzel 174,175, die zu getrennten Ausgangswellen 176,177 führen, an. Ein über Zwischenräder auf die beiden Übertragungswege gekoppeltes gemeinsames Zahnrad 178 sorgt dabei für einen entsprechenden Massenausgleich.

Bei den erfindungsgemäßen stufenlosen Schaltwerkgetrieben sind die von den Hubgliedern angetriebenen Zahnstangen als Sonderform eines Zahnrades, und zwar mit dem Teilkreis unendlich anzusehen. Wenn man nun von einem Zahnstangengetriebe ausgeht, bei dem sich neben dem Achsenplan ein Drehzahlplan ergibt und diesen Drehzahlplan durch einen Verschiebeplan ersetzt, dann wird beim erfindungsgemäßen Getriebe durch die Vollkreibewegungen des jeweiligen Hubgliedes eine Teilkreisverschiebung bewirkt, die als Grundlage zur Aufstellung eines Drehzahlplanes benutzt werden kann. Die in sehr kurzer Zeit durchführbare Beeinflussung der Drehzahländerungscharakteristik bestimmt bei Einhaltung großer Regelgenauigkeit die Dimension des stufenlos regelbaren Arbeitskreisdurchmessers (Teilkreis) für das erforderliche Arbeitspensum des Getriebes. Bei einem Arbeitskreisdurchmesser, der durch ein Hubglied antreibbaren Zahnstange von ca. 25 mm einer stufenlosen Verschiebedimension von 0,05mm aus der Nullstellung des Kurbelzapfens 4 ergibt sich z.B. eine Gangzahl von 0 bis 15 Gängen bei einem vergleichbaren Stufengetriebe. Da die erfindungsgemäßen stufenlos regelbaren Schaltwerkgetriebe eine Mikroverstellung der Verschiebedimension erlauben, würde sich bei einer Verstellung von 0,025 mm eine vergleichsweise Gangzahl von 0 bis 30 bei einem Stufengetriebe ergeben.

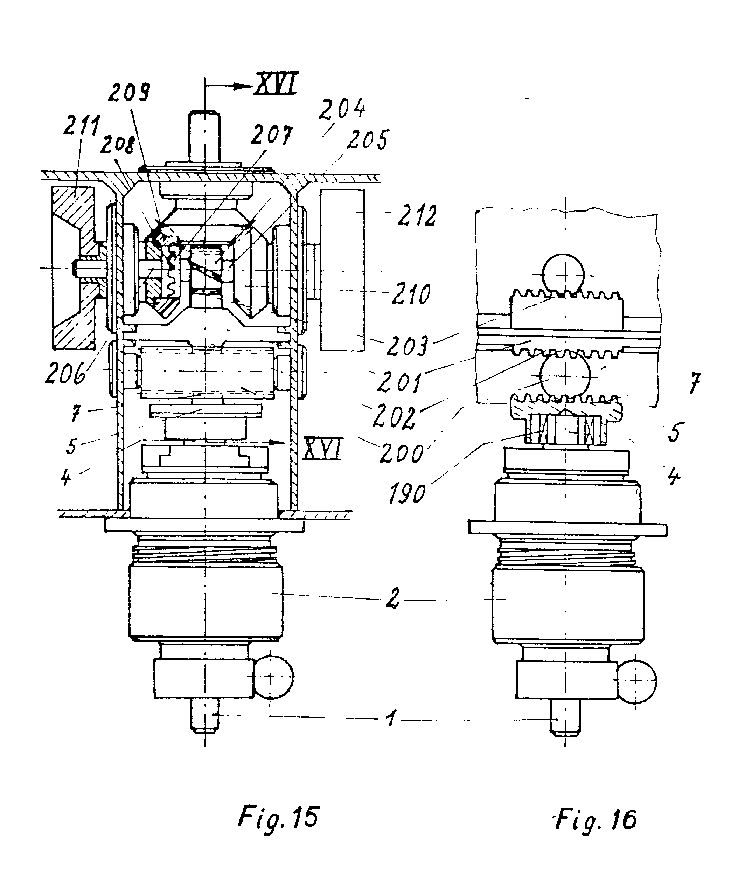

In den Darstellungen nach Fig. 15 und Fig. 16 ist ein Ausschnitt eines stufenlos regelbaren Schaltwerkgetriebes zu sehen, bei dem wie in den bisherigen Ausführungsbeispielen der Antrieb von einer Eingangswelle 1 über eine Verstelleinrichtung 2 auf einen im Exzenterradius verstellbaren Kurbelzapfen 4 übertragen wird. Der Kurbelzapfen 4 ist mit einem Hubglied 5 über eine Lagervorrichtung 190 drehbar gekoppelt und führt in Abhängigkeit von dem mit der Verstelleinrichtung 2 eingestellten Exzenterradius Vollkreisbewegungen durch. Eine Zahnstange 7, die auf der der Lagervorrichtung 190 abgewandten Seite am Hubglied 5 vorgesehen ist, steht mit einem walzenförmigen Zahnrad 200 im Eingriff und versetzt dieses Zahnrad beim Antrieb in vom eingestellten Exzenterradius abhängige Pendelbewegungen. Diese Pendelbewegungen werden auf ein Flachführungsglied 201, das mit einer Zahnstange 202 am walzenförmigen Zahnrad 200 kämmt, übertragen, und mit einer weiteren am Flachführungsglied 201 vorgesehenen Zahnstange 203 auf ein Führungsritzel 204 weitergeleitet. Das Führungsritzel 204 ist auf einer Hohlwelle 205 angeordnet bzw es bildet damit ein gemeinsames Bauelement, das auf einer Zwischenwelle 206 aufgesteckt ist. Beide Stirnseiten dieser Hohlwelle 205 sind mit Kupplungselementen 207 versehen, mit denen die Hohlwelle 205 wechselweise an Kupplungselemente 208 ankoppelt, die an Kegelzahnrädern 209,210 vorgesehen sind. Diese Kegelzahnräder 209,210 sitzen auf der Zwischenwelle 206, welche im Gehäuse 3 des Schaltwerkgetriebes in bisher beschriebener Weise gelagert ist und darüber hinaus zwei zum Massenausgleich vorgesehene Schwungräder 211, 212 trägt. Mit den beiden Kegelzahnrädern 209,210 kämmt ein gemeinsames Kegelzahnrad 213, das auf der Ausgangswelle 45 sitzt. Der Antrieb der Eingangswelle 1 wird daher stufenlos regelbar auf die Ausgangswelle 45 übertragen.

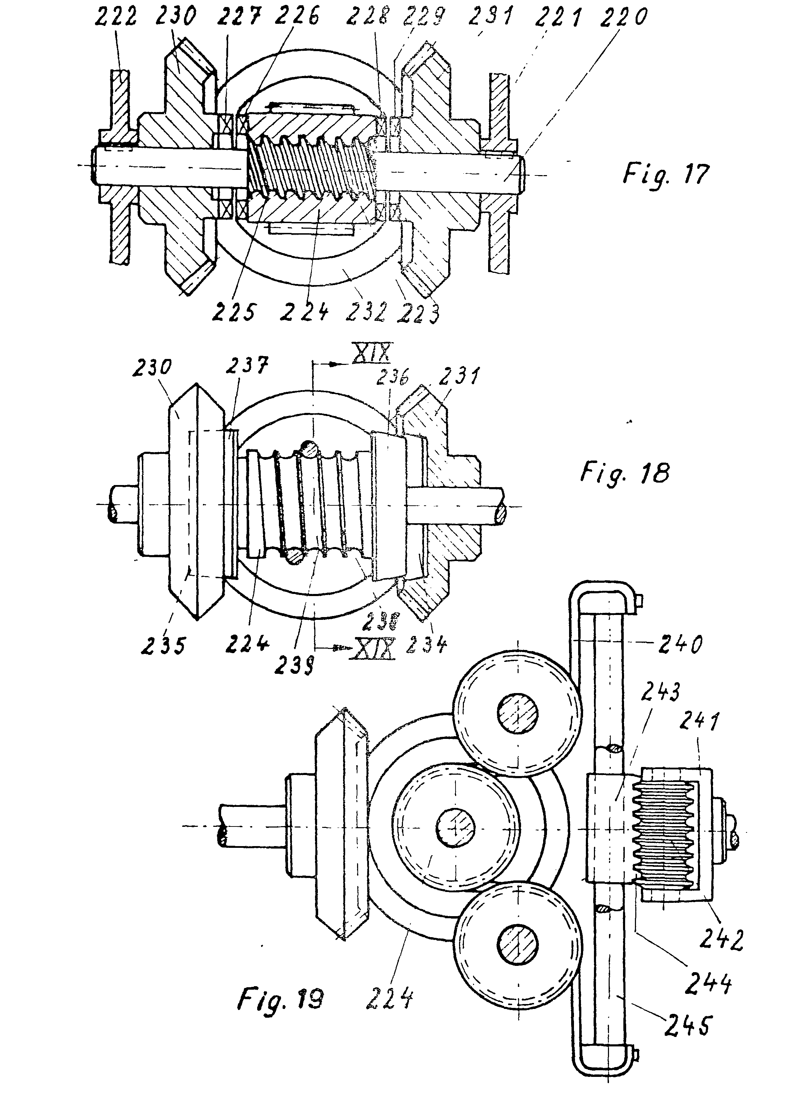

Der Ausschnitt des Schaltwerkgetriebes nach Fig. 17 zeigt eine Zwischenwelle 220, die unverdrehbar zwischen zwei Seitenwänden 221,222 eines Gehäuses 3 angeordnet ist. Im Mittelbereich besitzt diese Zwischenwelle 220 ein Spindelgewinde 223, auf das eine Hohlwelle 224 mit ihrem Innen-gewinde 225 aufgeschraubt ist. Diese Hohlwelle 224 trägt an ihren beiden Stirnseiten Kupplungselemente 226,228, die jeweils wechselweise an Kupplungselemente 227,229 ankuppelbar sind. Die Kupplungselemente 227,229 sind an Kegelzahnrädern 230,231 ange-

- 20 -

bracht, die neben den Seitenwänden 221,222 drehbar auf der Zwischenwelle 220 sitzen. Beide Kegelzahnräder 230,231 kämmen an einem gemeinsamen Kegelzahnrad 232, das auf einer nicht näher dargestellten Ausgangswelle sitzt. Die Hohlwelle 224, die auf ihrer Außenseite eine als Führungsritzel dienende Verzahnung 233 aufweist, besitzt axiales Spiel entsprechend bemessener Größe, um mit den Kupplungselementen beim Axialhub entweder an das Kegelzahnrad 230 oder an das Kegelzahnrad 231 ankuppeln zu können. Das Spindelgewinde 223 und das Innengewinde 225 der Hohlwelle 224 steuern dabei den Axialhub durch die Gewindesteigung. Bei diesem Ausführungsbeispiel kann die Hohlwelle 224 in den Seitenwänden 221,222 auch drehbar gelagert werden, wenn die Zwischenwelle 220 dafür die Kegelräder 230, 231 unverdrehbar trägt. Die Pendelbewegung der Hohlwelle 224 wird dabei über die Verzahnung bewirkt, die mit einer Zahnstange des zugehörigen Hubgliedes im Eingriff steht.

Bei einem weiteren Ausführungsbeispiel der Erfindung nach Fig. 18 sind im Unterschied zum Ausführungsbeispiel nach Fig. 17 die Kupplungen als Konuskupplungen ausgebildet. Hierbei sind die Kegelzahnräder 230,231 zu beiden Seiten der Hohlwelle 224 mit Konusbohrungen 234,235 versehen, in die jeweils ein Konus 236,237 der Hohlwelle 224 eingreifen. Unterschiedlich zu Fig.17 ist hierbei auch die Ankopplung der Hohlwelle an das zugehörige Hubglied. Dieses Ausführungsbeispiel zeigt darüber hinaus eine Ankopplungsart, bei der die Hohlwelle 224 als eine mit Führungselementen 238 versehene Antriebsrolle 239 ausgebildet ist, die einen Antrieb nach dem Prinzip eines sog. Umschlingungstriebes z.B. mit einem Seil oder einer Kette ermöglicht. Ein solcher Antrieb ist für Anwendungen mit längeren Übertragungswegen sinnvoll, wie z.B. für Handhabungsgeräte oder Manipulatoren. Wie die Darstellung nach Fig. 19 zeigt, kann ein Hubglied 241 mit einer Zahnrolle 242 an einer Verzahnung 244 eines Gleitkörpers 243 kämmen, der in einer Gleitstange 245 geführt ist. Der Gleitkörper 243 ist mit einem Seil 240 verbunden, so daß Vollkreisbewegungen des Hubgliedes 241 Hubbewegungen des Gleitkörpers 243 zur Folge haben. Diese Hubbewegungen werden über das Seil 240 auf die Hohlwelle 224 übertragen, welche Pendelbewegungen in der bereits beschriebenen Weise ausführt, die anschließend über wechselweise wirksame Kupplungen und Zwischenglieder auf die Ausgangswelle als kontinuierliche Drehung übertragen werden.

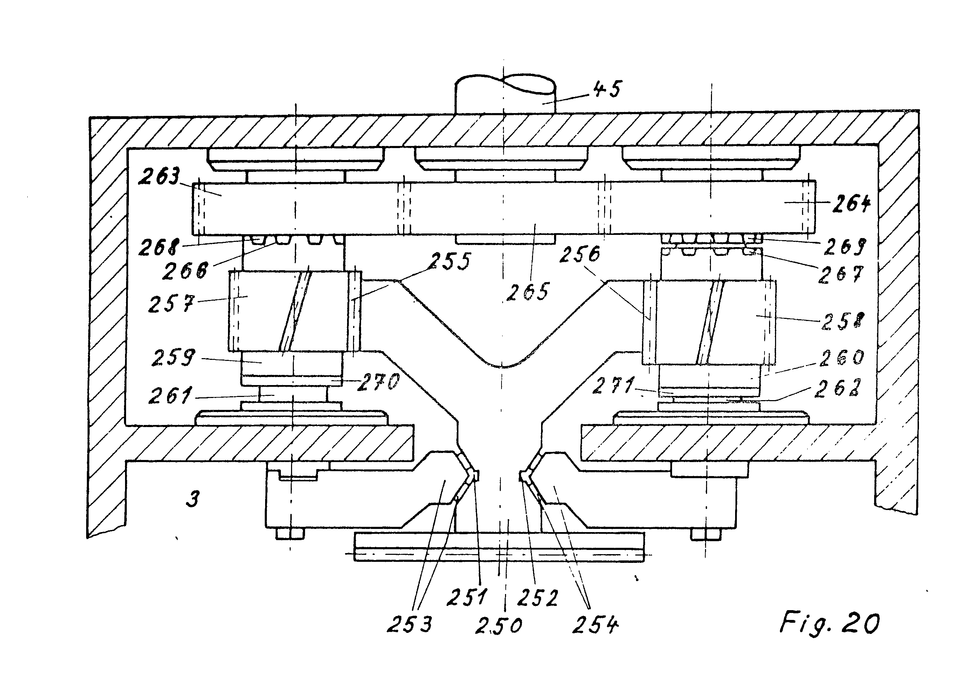

Beim letzten Ausführungsbeispiel der Erfindung nach Fig. 20 sind für die Umwandlung der Pendelbewegungen im Gegensatz zu den bisherigen Ausführungsbeispielen keine Kegelzahnräder sondern Stirnzahnräder eingesetzt. Die Hubbewegung eines hier nicht näher dargestellten Hubgliedes ist bei diesem Ausführungsbeispiel auf ein Flachführungsglied übertragen. Dieses Flachführungsglied 250 besitzt zwei seitliche Führungsnuten 251,252 für im Gehäuse 3 befestigte Rollenführungselemente 253,254 welche die Reibung bei Hubbewegungen sehr gering halten. Das Flachführungsglied 250 teilt sich hinter den Führungsnuten 251,252 gabelförmig auf und besitzt dort zwei gegenüberliegende schrägverzahnte Zahnstangen 255,256. An diesen Zahnstangen kämmen jeweils ein schrägverzahntes Zahnrad 257,258 die jeweils mit einer Hohlwelle 259,260 ein gemeinsames Bauteil bilden. Beide Hohlwellen 259,260 sind auf parallel angeordneten Zwischenwellen 261,262 im Gehäuse 3 aufgesteckt und tragen jeweils ein Zahnrad 263,264. Diese Zahnräder kämmen mit einem gemeinsamen Zahnrad 265, das auf der Ausgangswelle 45 sitzt. Die wechselweise wirksamen Kupplungen sind bei diesem Ausführungsbeispiel symbolisch als Stirnverzahnungen 266,267 der Hohlwellen angedeutet, welche in Stirnverzahnungen 268,269 der auf den Zwischenwellen 261,262 sit-

- 22 -

zenden Zahnräder 263,264 eingreifen. Zur Verringerung der
Reibung ist dabei jeder Hohlwelle 259,260 ein Drucklager 270
271 zugeordnet, die auf den den Zahnrädern 263,264 abgewandten Seiten vorgesehen sind. Das Ausführungsbeispiel hat wie
bereits erwähnt den Vorteil mit normalen Stirnzahnrädern aufgebaut werden zu können und damit wesentlich billiger zu sein.

R 101 EP                          Bremen, den 20,6.1980
                                  Sm/Sb

## Patentansprüche

1) Mechanisches Schaltwerkgetriebe, bei dem die gleichförmige Drehbewegung einer Eingangswelle über verstellbare Zwischenglieder zur stufenlosen Drehzahlregelung auf eine Ausgangswelle übertragen wird, dadurch gekennzeichnet, daß die Eingangswelle (1) den Antrieb auf einen von einer Verstelleinrichtung (2) im Exzenterradius stufenlos verstellbaren Kurbelzapfen (4) überträgt, der ein mit einem schlupffreien Kraftübertragungselement (7,11) versehenes Hubglied (5) derart in Vollkreisbewegungen versetzt, daß ein auf einer Vorgelegewelle (10,31) angeordnetes und mit dem Kraftübertragungselement (7,11) des Hubgliedes (5) im Eingriff stehendes Gegenstück (9,30) periodische Pendelbewegungen ausführt, die von der Vorgelegewelle (10,31) über zwei mit der Pendelbewegung wechselweise wirksame Kupplungen (25,26;37,38) und Zwischenglieder (23,24,27;39,40,41) auf die Ausgangswelle (45) übertragen werden.

2) Mechanisches Schaltwerkgetriebe nach Anspruch 1 dadurch gekennzeichnet, daß das Hubglied (5) auf einer Seite seiner Drehachse eine als schlupffreies Kraftübertragungselement wirkende und mit einem Führungsritzel (9) einer ersten Vorgelegewelle (10) im Eingriff stehende Zahnstange (7) und auf der anderen Seite einen Mitnehmerstab (8) mit einem darauf längsverschiebbaren Zahngleitkörper (11) aufweist, der gleichzeitig auf zwei senkrecht zum Mitnehmerstab (8) liegenden Gleitwellen (12,13) geführt ist, und mit seiner Verzahnung an einem Führungsritzel (30) einer zweiten senkrecht zur ersten Vorgelegewelle (10) liegenden Vorgelegewelle (31) kämmt.

3) Mechanisches Schaltwerkgetriebe nach Anspruch 1 oder 2, dadurch gekennzeichnet, daß die Pendelbewegungen der ersten Vorgelegewelle (10) und die Pendelbewegungen der zweiten Vorgelegewelle (31) durch wechselweise wirksame Kupplungen (25;26;37,38) und Zwischenräder (23,24,27;39,40,41) in einer sich gegenseitig jeweils zur Hälfte überlappenden Weise auf die Ausgangswelle (45) übertragen werden.

4) Mechanisches Schaltwerkgetriebe nach einem der Ansprüche 1 bis 3, dadurch gekennzeichnet, daß die mit der Pendelbewegung wechselweise wirksamen Kupplungen (25,26;37,38) durch jeweils zwei miteinander kämmende schrägverzahnte Zahnräder (14,21;15,22;32,34;33,35) gebildet sind, die auf der jeweiligen Vorgelegewelle (10,31) und einer dazu parallel angeordneten Zwischenwelle (20,36) angeordnet sind, und daß die in axialer Richtung auf der Zwischenwelle (10,36) verschiebbar angeordneten schrägverzahnten Zahnräder (21,22;34,35) ein in Axialrichtung wirkendes Kupplungselement (25,37) aufweisen zum Eingriff in ein axial wirkendes Gegenstück (26,38) eines auf der Zischenwelle (20,36) axial unverschiebbar angeordneten und mit einem Kegelzahnrad (23,24;39,40) der Ausgangswelle (45) kämmenden Kegelzahnrades (27,41).

5) Mechanisches Schaltwerkgetriebe nach einem der Ansprüche 1 bis 4, dadurch gekennzeichnet, daß der Winkel der Schrägverzahnung derart bemessen ist, daß die auf der Zwischen- (20,36) angeordneten schrägverzahnten Zahnräder (21,22; 34,35) hierdurch beim Arbeitsgang die zum Kupplungsvorgang durch axiale Verschiebung erforderliche Kraft erhalten.

6) Mechanisches Schaltwerkgetriebe nach einem der Ansprüche 1 bis 5, dadurch gekennzeichnet, daß als Kupplungselemente für die auf der Zwischenwelle (20,36) axial verschiebbarund axial unverschiebbar angeordnete Zahnräder (21,22,23,24;34,35,39,40) Axialverzahnungen (25,26;37,38) eingesetzt sind.

7) Mechanisches Schaltwerkgetriebe nach einem der Ansprüche
1 bis 6, dadurch gekennzeichnet, daß die miteinander kämmenden Zahnräder (14,21; 15,22;32,34;33,35) der Vorgelegewellen (10,31) und der Zwischenwellen (20,36) in ihren
Zähnezahlen ein konstantes Verhältnis zueinander haben.

8) Mechanisches Schaltwerkgetriebe nach einem der Ansprüche
1 bis 7, dadurch gekennzeichnet, daß auf der Vorgelegewelle (10) zwei Zahnräder (16,17) angeordnet sind, die
jeweils mit einer Zahnstange eines Zahngleitkörpers (18,
19) zum Massenausgleich im Eingriff stehen.

9) Mechanisches Schaltwerkgetriebe nach einem der Ansprüche
1 bis 8, dadurch gekennzeichnet, daß schnellschaltbare vom
Hub des Hubgliedes (5) steuerbare Kupplungen eingesetzt
sind.

10) Mechanisches Schaltwerkgetriebe nach einem der Ansprüche
1 bis 9, dadurch gekennzeichnet, daß die den Antrieb von
der Eingangswelle (1) auf den im Exzenterradius verstellbaren Kurbelzapfen (4) übertragende Verstelleinrichtung
(2) eine mit der Eingangswelle (1) gekoppelte und parallel
zu deren Achsrichtung verschiebbare Zahnstange (54) aufweist, die bei ihrer Verstellung die Stellbewegung über
Zwischenräder (57,58,59) auf eine weitere Zahnstange (60)
überträgt, welche an einem in einer Schlittenführung angeordneten und den Kurbelzapfen (4) tragenden Gleitkörper
(61) vorgesehen ist.

11) Mechanisches Schaltwerkgetriebe nach einem der Ansprüche
1 bis 10, dadurch gekennzeichnet, daß die Eingangswelle
(1) zur Aufnahme der verstellbaren Zahnstange (54) und
der Zwischenräder (57,58,59) innerhalb der Verstelleinrichtung (2) als Hohlzylinder (51) ausgebildet ist der
an seiner Stirnseite die Schlittenführung für den mit Kurbelzapfen (4) versehenen Gleitkörper (61) aufweist.

12) Mechanisches Schaltwerkgetriebe nach einem der Ansprüche 1 bis 11, dadurch gekennzeichnet, daß die verschiebbare Zahnstange (54) auf der Innenseite eines Schenkels (53) eines im Hohlzylinder (51) der Eingangswelle (1) geführten U-förmigen Verstellgliedes (52) angeordnet ist, und daß die Schenkel (53) des U-förmigen Verstellgliedes (52) je eine Spindel (55) zum Mitnehmen und Führen aufweisen, welche durch Bohrungen im Boden des an der Eingangswelle (1) vorgesehenen Hohlzylinders (51) durchgreifen und an einer über die Eingangswelle (1) gestreiften Stützbuchse (56) befestigt sind.

13) Mechanisches Schaltwerkgetriebe nach einem der Ansprüche 1 bis 12, dadurch gekennzeichnet, daß der Hohlzylinder (51) der Eingangswelle (1) mit einem entsprechend ausgebildeten Kugellager (50) in einer am Getriebegehäuse (3) befestigten Lagerbuchse (49) gelagert ist, auf deren Außengewinde eine als Überwurfmutter ausgebildete im Boden die Stützbuchse (56) und ein Drucklager (62) aufweisende Verstellhülse (48) aufgeschraubt ist.

14) Mechanisches Schaltwerkgetriebe nach einem der Ansprüche 1 bis 13, dadurch gekennzeichnet, daß die Verstellhülse (48) eine Außenverzahnung aufweist, in die eine durch ein Stellorgan (46) verstellbare Schnecke (47) eingreift zum Verdrehen der Verstellhülse (48) und damit zum Verschieben der Zahnstange (54) über die Mitnehmerführungsspindeln (55) .

15) Mechanisches Schaltwerkgetriebe nach einem der Ansprüche 1 bis 14, dadurch gekennzeichnet, daß das vom Kurbelzapfen (4) antreibbare Hubglied (5) mit einem weiteren im Exzenterradius verstellbaren Kurbelzapfen (73) einer Doppelkurbel (70) gekoppelt ist, deren zweiter im Exzenterradius ebenfalls verstellbarer Kurbelzapfen (74) ein Hubglied (65) eines weiteren zur Ausgangswelle (45) führenden
Übertragungsweges (III,IV) in Vollkreisbewegungen versetzt.

16) Mechanisches Schaltwerkgetriebe nach einem der Ansprüche 1
bis 15, dadurch gekennzeichnet, daß die Hubglieder (5,65)
je zwei schlupffreie Kraftübertragungselemente (7,8;66,67)
aufweisen, die jeweils in einem von vier radialsymmetrisch
zur Eingangswelle (1) liegenden Übertragungsweg (I,II,III,
IV) angeordnet sind.

17) Mechanisches Schaltwerkgetriebe nach einem der Ansprüche 1
bis 16, dadurch gekennzeichnet, daß die im Exzenterradius
verstellbaren Kurbelzapfen (73,74) der Doppelkurbel (70)
bei ihrer Einstellung in zueinander entgegengesetzter Richtung verstellbar sind.

18) Mechanisches Schaltwerkgetriebe nach einem der Ansprüche 1
bis 17, dadurch gekennzeichnet, daß die Doppelkurbel (70)
mit einer Befestigungshülse (75) an einer Zwischenwand (68)
des Getriebegehäuses (3) gelagert ist und mit einer Lagerbuchse (71) die Kurbelzapfen (73,74) koppelt.

19) Mechanisches Schaltwerkgetriebe nach einem der Ansprüche 1
bis 18, dadurch gekennzeichnet, die Lagerbuchse (71) an ihren beiden Stirnseiten je eine zueinander parallele Führungsnut (77,78) aufweist, in die die Kurbelzapfen (73,74)
mit einem Führungskopf (79,80) eingreifen, und daß in der
Lagerbohrung der Lagerbuchse (71) eine Triebwelle (72) gelagert ist, deren an den beiden Enden vorgesehenen Verzahnungen mit je einer Verzahnung der Führungsköpfe (79,80)
im Eingriff steht.

20) mechanisches Schaltwerkgetriebe nach einem der Ansprüche 1 bis 19, dadurch gekennzeichnet, daß das als Zahnstange (110, 111;130;148;156;172,173) ausgebildete und an einem Zahnrad (112,113;131;149;155;174,175) der Vorgelegewelle kämmende Kraftübertragungselement an einem Hubbewegungen längs zur Zahnstange zulassenden Führungsglied (109;125,127,128,129; 142,144,145,146,147;157,158,159,160;170171) angeordnet ist, und daß das Hubglied (103,5) an die Zahnstange (110;111;130; 148;156;172,173) mit einem Bewegungen senkrecht zur Hubbewegung im Führungdglied (109;125,...170,171) zulassenden Kopplungelement (105,106;123;140,141;162;166) verbunden ist.

21) mechanisches Schaltwerkgetriebe nach einem der Ansprüche 1 bis 20, dadurch gekennzeichnet, daß das Kopplungselement (105,106;123;140,141;162;166) formschlüssig an das Hubglied (103,5) und die Zahnstange (110,111;130;148;156;172,173) gekoppelt ist.

22) mechanisches Schaltwerkgetriebe nach einem der Ansprüche 1 bis 21, dadurch gekennzeichnet, daß das Kopplungselement als walzenförmiges Zahnrad (166) ausgebildet ist.

23) mechanisches Schaltwerkgetriebe nach einem der Ansprüche 1 bis 22, dadurch gekennzeichnet, daß das Führungsglied als Flachführungsglied (125;142;157,158,159,160) nach Art einer Schwalbenschwanzführung ausgebildet ist.

24) mechanisches Schaltwerkgetriebe nach einem der Ansprüche 1 bis 23, dadurch gekennzeichnet, daß das Flachführungsglied (142) seitliche in Zahnrollen (146,147) geführte Längsverzahnungen (144,145) aufweist.

25) Mechanisches Schaltwerkgetriebe nach einem der Ansprüche 1 bis 24, dadurch gekennzeichnet, daß das vom Kurbelzapfen (4) der Verstelleinrichtung (2) antreibbare Hubglied (103) aus einem in seiner Mitte an den Kurbelzapfen (4) drehbar gekoppelten Kurbelstab bestent, der an seinen beiden Enden mit gleichem Achsabstand je einen Kurbelzapfen (73) zum gleichzeitigen und gleichsinnigen Verstellen je eines mit der zugeordneten Zahnstange (110,111) in Verbindung stehenden Kopplungselemente (105,106) aufweist.

26) Mechanisches Schaltwerkgetriebe nach einem der Ansprüche 1 bis 25, dadurch gekennzeichnet, daß der Kurbelstab an seinen Enden jeweils an einen Kurbelzapfen (73) einer verstellbaren Doppelkurbel (70) gekoppelt ist, deren andere Kurbelzapfen (74) das mit der Zahnstange (110,111) in Verbindung stehende Kopplungselement (105,106) antreiben.

27) Mechanisches Schaltwerkgetriebe nach einem der Ansprüche 1 bis 26, dadurch gekennzeichnet, das die als Kraftübertragungselement wirkende Zahnstange in zwei Einzelzahnstangen (172,173) aufgeteilt ist, die jeweils an einem Zahnrad (174, 175) einer Vorgelegewelle zweier Übertragungswege kämmen.

28) Mechanisches Schaltwerkgetriebe nach einem der Ansprüche 1 bis 27, dadurch gekennzeichnet, daß die Übertragungswege zu getrennten Ausgangswellen (176,177) führen.

29) Mechanisches Schaltwerkgetriebe nach einem der Ansprüche 1 bis 28, dadurch gekennzeichnet, daß eine Kupplungshälfte (207;226,228;236,237;266,267) der wechselweise wirksamen Kupplungen jeweils an einer Stirnseite der als Hohlwelle (205,224,259,260) ausgebildeten und auf einer Zwischenwelle (206,220,261,262) sitzenden Vorgelegewelle vorgesehen ist, die in Abhängigkeit vom Pendelhub der Vorgelegewelle an ein auf der Zwischenwelle (206,220261,262) sitzendes und die zweite Kupplungshälfte (208;227,229;234,235;268,269) aufweisendes Übertragungsglied (209,210;230,231;263,264) kuppelbar ist.

30) Mechanisches Schaltwerkgetriebe nach einem der Ansprüche 1 bis 29, dadurch gekennzeichnet, daß das die zweite Kupplungshälfte (208;227,229;235;263,264) aufweisende Übertragungsglied (209,210;230,231;263,264) als ein mit einem Zahnrad (232,265) der Ausgangswelle (45) in Verbindung stehendes Zahnrad (209,210;230,231;263,264) ausgebildet ist.

31) Mechanisches Schaltwerkgetriebe nach einem der Ansprüche 1 bis 30, dadurch gekennzeichnet, daß das die zweite Kupplungshälfte (208;227,229;234,235) aufweisende Übertragungsglied als Kegelzahnrad (209,210;230,231) ausgebildet ist.

32) Mechanisches Schaltwerkgetriebe nach einem der Ansprüche 1 bis 31, dadurch gekennzeichnet, daß das die zweite Kupplungshälfte (268,269) aufweisende Übertragungsglied als Zahnrad (263,264) mit Stirnverzahnung ausgebildet ist.

33) Mechanisches Schaltwerkgetriebe nach einem der Ansprüche 1 bis 32, dadurch gekennzeichnet, daß die als Hohlwelle (224) ausgebildete Vorgelegewelle in ihrer Bohrung mit einem Innengewinde (225) versehen ist, mit dem die Hohlwelle (224) auf ein auf der Zwischenwelle (220) vorgesehenes Spindelgewinde(223) zur Steuerung des Axialhubes aufschraubbar ist.

34) Mechanisches Schaltwerkgetriebe nach einem der Ansprüche 1 bis 33, dadurch gekennzeichnet, daß die Zwischenwelle (220) unverdrehbar im Gehäuse eingesetzt ist und drehbare an die Hohlwelle (224) ankuppelbare Zahnräder (230,231) trägt.

35) Mechanisches Schaltwerkgetriebe nach einem der Ansprüche 1 bis 34, dadurch gekennzeichnet, daß die Zwischenwelle drehbar im Gehäuse gelagert ist und unverdrehbare an die Hohlwelle kuppelbare Zahnräder trägt.

36) Mechanisches Schaltwerkgetriebe nach einem der Ansprüche 1 bis 35, dadurch gekennzeichnet, daß das auf der Hohlwelle (224;259,260) angeordnete Gegenstück als ein mit der Zahnstange (255,265) des zugehörigen Hubgliedes im Eingriff stehendes Zahnrad (257,258) mit Schrägverzahnung ausgebildet ist.

37) Mechanisches Schaltwerkgetriebe nach einem der Ansprüche 1 bis 36, dadurch gekennzeichnet, daß das auf der Hohlwelle (224) angeordnete Gegenstück als eine mit Führungselementen (238) versehene Antriebsrolle (239) eines Umschlingungstriebes ausgebildet ist.

38) Mechanisches Schaltwerkgetriebe nach einem der Ansprüche 1 bis 37, dadurch gekennzeichnet, daß die Antriebsrolle (239) Rillen zur Führung eines mit einem Seil aufgebauten Umschlingungstriebes aufweist.

39) Mechanisches Schaltwerkgetriebe nach einem der Ansprüche 1 bis 38, dadurch gekennzeichnet, daß die Antriebsrolle mit einem Zahnkranz für einen Kettenantrieb versehen ist.

40) Mechanisches Schaltwerkgetriebe nach einem der Ansprüche 1 bis 39, dadurch gekennzeichnet, daß die Kupplungen zur Ankopplung der Hohlwelle (224) an die Zwischenwelle (220) als Konuskupplungen (234,236;235,237) ausgebildet sind.

FIG. 1

Fig 2

Fig.3

FIG. 4

Fig. 5

Fig. 6

Fig. 7

Fig. 8

Fig. 9

0022273

70    73

100

101    4

70

73    Fig. 10b

107    109    105

103

109

106    108    Fig. 10a

B

b        c

A        C

a        d

D

Fig. 10c

0022273

Fig. 11

Fig. 12

0022273

Fig. 13

Fig. 14

12/14

Fig. 15

Fig. 16

0022273

222 230 227 226 228 229 231 221 220

Fig. 17

225 224 232 223

230 237 XIX 236 231

Fig. 18

235 224 239 XIX 234

240

243

241

242

244

Fig. 19 224 245

Fig. 20

263
264
268
269
266
267
257
255
256
258
265
259
260
261
270
271
262
3
251 252
253 250 254
45

0022273